# EUROPÄISCHE PATENTSCHRIFT

(11) **EP 1 595 594 B1**
(45) Veröffentlichungstag und Bekanntmachung des Hinweises auf die Patenterteilung: **07.03.2007**
(21) Anmeldenummer: 05016489.6
(22) Anmeldetag: 18.05.2000
(51) Int. Cl.: B01F 13/00, B01F 7/00, B01F 7/16, A61C 9/00

(54) **Dynamischer Mischer**
Dynamic mixer
Mélangeur dynamique

(30) Priorität: 02.12.1999 CH 221099
(43) Veröffentlichungstag der Anmeldung: 16.11.2005
(62) Teilanmeldung aus: 00810432.5
(73) Patentinhaber: Mixpac Systems AG, 6343 Rotkreuz (CH)
(72) Erfinder: Keller, Wilhelm A., 6042 Merlischachen (CH)
(74) Vertreter: AMMANN PATENTANWÄLTE AG BERN

(56) Entgegenhaltungen:
- EP-A- 0 492 412
- EP-A- 0 885 651
- DE-A- 19 947 331
- DE-C- 4 235 736
- US-A- 5 498 078

## Beschreibung

Die vorliegende Erfindung bezieht sich auf eine Austraganordnung mit einer Doppelkartusche oder einem Austraggerät und einem dynamischen Mischer gemäss Oberbegriff von Patentanspruch 1. Ein solcher Mischer ist aus der EP-A-492 412 bekannt. Dieser Mischer ist für ein Volumenverhältnis der Kartuschenbehälter von 1:5 offenbart und weist entsprechend verschieden dimensionierte Einlassstutzen auf. Ausführungsbeispiele für Kartuschen mit einem anderen Volumenverhältnis von beispielsweise 1:1 sind weder offenbart noch angedeutet.

Die DE 42 35 736 C offenbart eine Austraganordnung mit einer Doppelkartusche und einem dynamischen Mischer mit Ein- und Auslässe, die je den gleichen Durchmesser aufweisen, so dass ohne Vororientierung die Einlässe in die Auslässe schiebbar sind. Über verschiedenartige Ein- oder Auslässe wird nicht offenbart.

Die EP 0 885 651 A1 des gleichen Anmelders offenbar eine Austraganordnung mit einer Doppelkartusche und einem statischen Mischer mit Einlässen, die einen unterschiedlichen Durchmesser aufweisen. Die Auslässe der Kartusche sind nicht spezifiziert und daher wird auch nicht die Problematik eines Anschlusses eines Mischers an verschiedene Kartuschen mit Auslässen mit unterschiedlichen oder gleichen Durchmessern angesprochen.

Von diesem Stand der Technik ausgehend ist es Aufgabe der vorliegenden Erfindung, eine Austraganordnung mit einem dynamischen Mischer anzugeben, der sowohl an Kartuschen oder Austraggeräten mit Auslassstutzen mit gleichen als auch mit unterschiedlichen Durchmessern angeschlossen werden kann. Die Aufgabe wird mit der Anordnung gemäss Anspruch 1 gelöst.

Die Erfindung wird im folgenden anhand von Zeichnungen von Ausführungsbeispielen näher erläutert.
- Fig. 1: zeigt in einem Schnitt gemäss I-I in Figur 2 einen Mischrotor eines dynamischen Mischers,
- Fig. 1A: zeigt einen Schnitt gemäss der Linie IA-IA in Fig. 1,
- Fig. 1B: zeigt einen Schnitt gemäss der Linie IB-IB in Fig. 1,
- Fig. 2: zeigt den Mischrotor von Figur 1 von der Eingangsseite,
- Fig. 3: zeigt das Rotorgehäuse eines Mischers gemäss Schnitt III-III in Fig.4,
- Fig. 4: zeigt das Rotorgehäuse von Figur 3 von der Eingangsseite,
- Fig. 5: zeigt den Deckel des Rotorgehäuses gemäss der Linie V-V in Fig. 6,
- Fig. 6: zeigt den Rotorgehäusedeckel von der Ausgangsseite,
- Fig. 7: zeigt einen Längsschnitt des zusammengebauten Mischers gemäss den Figuren 1-6 an Auslässen mit unterschiedlichen Durchmessern, und
- Fig. 8: zeigt einen Längsschnitt des zusammengebauten Mischers gemäss den Figuren 1-6 an Auslässen mit gleichem Durchmesser.

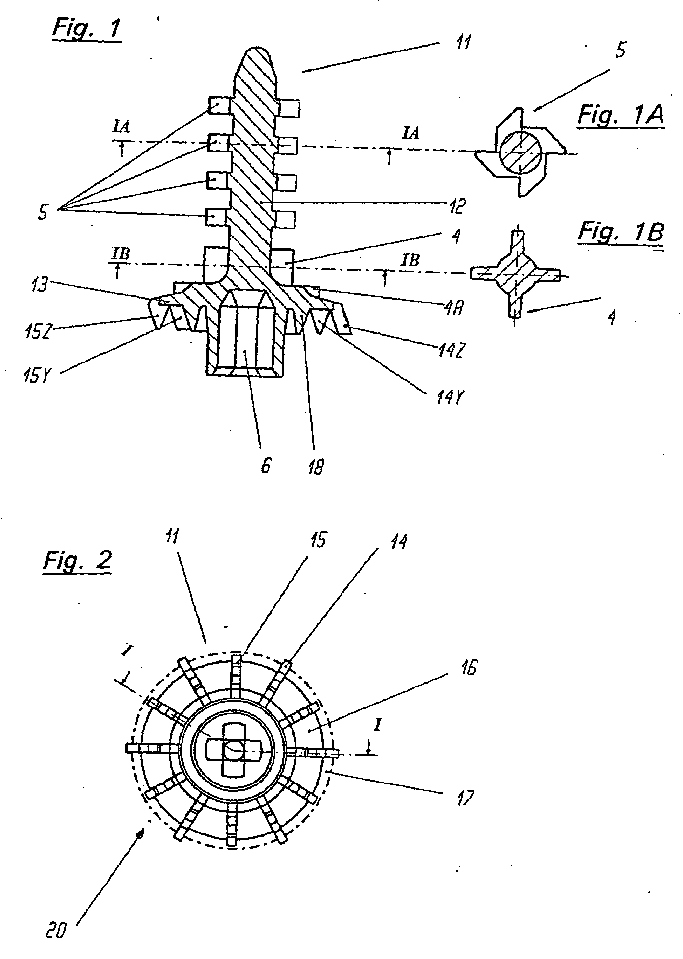

Der dynamische Mischer gemäss Erfindung besteht aus einem Mischrotor und einem Rotorgehäuse mit einem Rotorgehäusedeckel. In den Figuren 1 und 2 ist ein Ausführungsbeispiel eines Mischrotors gezeigt.

Figur 1 zeigt einen Mischrotor 11 mit einer Rotornabe 12 an der beim Einlass eine Rotorscheibe 13 angeordnet ist. An der Rotorscheiben-Rückseite sind die Mischflügel 4 sowie weitere Mischflügel 4A und nachfolgend die Mischnocken 5 angeordnet. In Figur 1A ist der Querschnitt der Mischnocken 5 und in Figur 1B der Querschnitt der Mischflügel 4 dargestellt.

Eingangsseitig weist die Rotorscheibe 13 Mitnehmer auf, die sich abwechslungsweise unterschiedlich weit nach aussen erstrecken, wobei die Mitnehmer 15 weniger nach aussen ragen als die Mitnehmer 14. Die Mitnehmer 14 und 15 weisen ein zahnförmiges Profil auf, wobei sich jeweils ein Flügel 15Y oder 15Z an Mitnehmer 15 versetzt in bezug auf die Flügel 14Y oder 14Z an Mitnehmer 14 angeordnet sind.

Dadurch wird die Rotorscheibeneingangssseite in nicht abgeschlossene Kammerabschnitte 16 unterteilt, die der proportionierten, um 180° versetzten wechselweisen Aufnahme und dem Weitertransport der beiden zu vermischenden Komponenten dienen, und so zur Vormischung beitragen. Die Komponenten können, von den Einlässen her kommend, nur über die zwischen den Mitnehmern sich ergebenden ringförmigen Spälte 17 zwischen dem Rotorscheibenumfang und Rotorgehäuse auf die Rotorscheibenrückseite gelangen. Es ist aber auch möglich, ringförmige Spälte näher zum Zentrum hin vorzusehen, zusammen mit den peripheren oder nur solche. Ferner weist die Rotorscheibe einen Bund 18 zur Aufnahme der Dichtlippe auf.

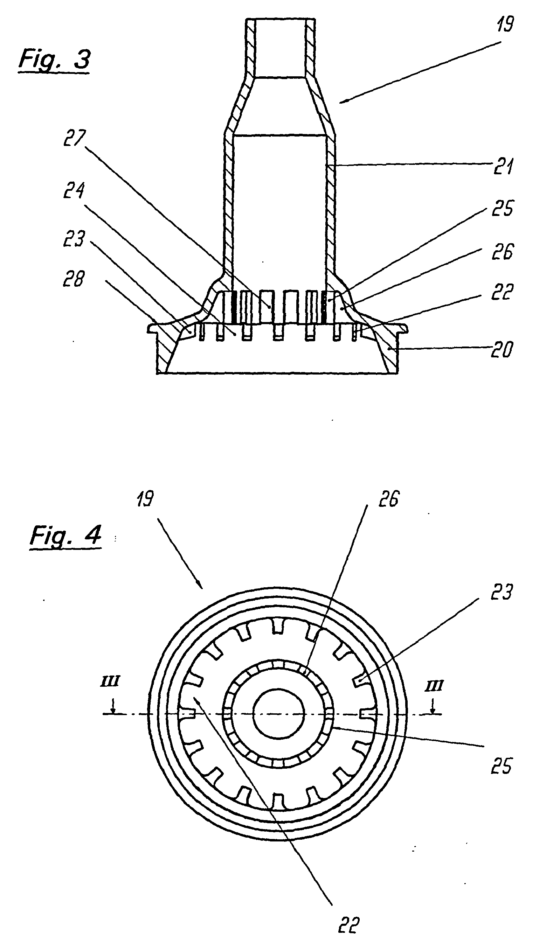

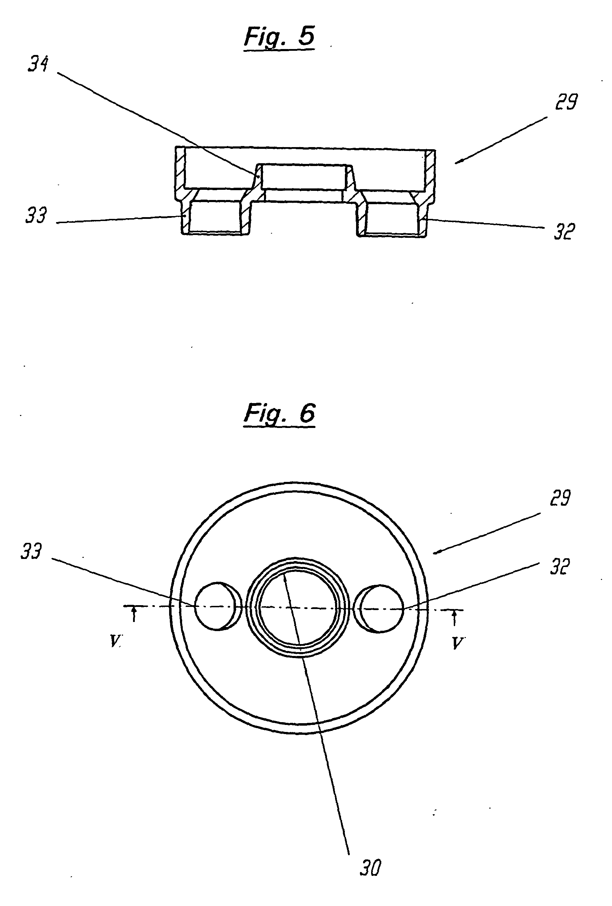

Der Mischrotor 11 ist in einem zweiteiligen Rotorgehäuse angeordnet, das in den Figuren 3 bis 8 dargestellt ist. Das Rotorgehäuse 19 gemäss den Figuren 3 und 4 weist ein Tellergehäuseteil 20 zur Aufnahme der Rotorscheibe 13 und ein Zylindergehäuseteil 21 zur Aufnahme der Rotornabe 12 auf. An der Bodenfläche des Tellergehäuseteils 20 ist ein erster, äusserer Statorkamm 22 angeordnet, der aus einzelnen Stegen 23 besteht, wobei die vorgemischten Komponenten durch die Steg-Zwischenräume 24 zum zweiten, inneren Statorkamm 25 gelangen, der innere Stege 26 mit Zwischenräumen 27 aufweist, durch die die vorgemischten Komponenten zu den Mischflügeln 4A, 4 sowie zu den Mischnocken 5 gelangen, um von diesen nochmals zerteilt und vermischt zu werden. Der Tellergehäuseteil besitzt ferner eine Auflagefläche 28, an welche ein Bajonett-Ring 35 angreift.

In den Figuren 5 und 6 ist ein Rotorgehäusedeckel 29 dargestellt, der ein Rotorlager 30 zur Aufnahme der Mitnehmernabe 31 sowie zwei gleiche Einlässe 32 und 33 aufweist. Zwecks guter Abdichtung der Mitnehmernabe weist der Rotorgehäusedeckel 29 eine Dichtlippe 34 auf.

Es ist ferner möglich, im Bereich der Mischnocken-Kränze weitere Statorelemente am Zylindergehäuseteil 21 vorzusehen, um eine weitere Verbesserung der Mischqualität zu erzielen.

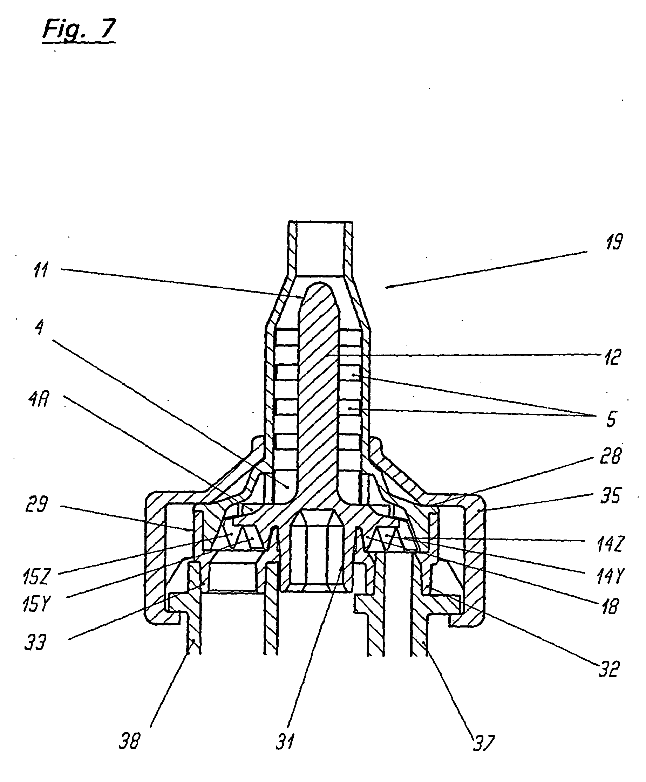

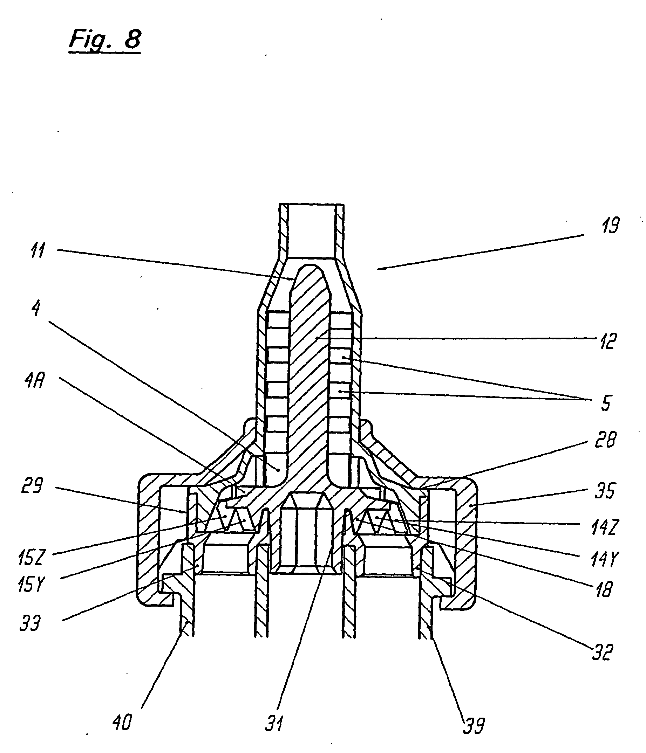

In den Figuren 7 und 8 ist dargestellt, dass bei geeigneter Dimensionierung ein Mischer gemäss Erfindung sowohl für Doppelkartuschen oder Austraggeräte mit Auslässen mit gleichem Durchmesser als auch für Doppelkartuschen oder Austraggeräte mit Auslässen mit verschiedenem Durchmesser verwendet werden kann und dies ohne sich um dessen Orientierung kümmern zu müssen.

In Figur 7 ist im Schnitt ein zusammengebauter Mischer mit gleich dimensionierten Einlässen dargestellt, der mit einer Doppelkartusche oder Austraggerät verbindbar ist, deren Behälter ein Querschnittsverhältnis von 5:1 und deren Auslässe unterschiedliche Durchmesser besitzen. In Figur 7 sind nur die Auslässe 37 und 38 eingezeichnet. Der eine Einlass 32 des Mischers ist über den kleineren Auslass 37 geschoben und der andere Einlass 33 des Mischers ist in den grösseren Auslass 38 eingeschoben, wobei der Mischer ohne vorgehende Orientierung aufgesetzt werden kann.

In Figur 8 ist dargestellt, dass derselbe Mischer wie in Figur 7 auch mit einer Doppelkartusche oder einem Austraggerät mit gleichen Auslässen verbunden werden kann, wobei die beiden Einlässe 32, 33 des Mischers in die Auslässe 39, 40 eingeschoben werden können, auch hier ohne vorhergehende Orientierung.

Der Mischer wird in diesem Beispiel mittels eines Bajonett-Rings 35 gesichert, wobei dieser auch ein Gewindemutter-Ring sein kann. Die Verwendung desselben Mischers ist bei entsprechender Dimensionierung der Auslässe auch für Doppelkartuschen oder Austraggeräte mit anderen Querschnittsverhältnissen und Auslass-Durchmessern als 1:1 und 5:1, z.B. 10:1, möglich.

Die beschriebene Anordnung ergibt bei gleicher Baulänge wie bei vorbekannten dynamischen Mischern eine wesentlich höhere Mischleistung und Mischqualität bei niedrigerer Drehzahl und arbeitet bei relativ geringem Staudruck.

## Patentansprüche

1. Austraganordnung mit einer Doppelkartusche oder einem Austraggerät und einem dynamischen Mischer, **dadurch gekennzeichnet, dass** der Mischer zwei gleiche Einlässe (32, 33) aufweist und die Doppelkartusche oder das Austraggerät Auslässe (37, 38) aufweist, deren Durchmesser verschieden sind, wobei, ohne Vororientierung, der eine Einlass (32) des Mischers über den kleineren Auslass (37) der Kartusche oder des Austraggerätes schiebbar und der andere Einlass (33) in den grösseren Auslass (38) steckbar ist.

2. Austragsanordnung nach Anspruch 1, **dadurch gekennzeichnet, dass** sie mittels eines Bajonett-Rings (35) am Auslassende einer Doppelkartusche oder eines Austraggerätes befestigbar ist.

## Claims

1. Dispensing assembly including a double cartridge or a dispensing appliance and a dynamic mixer, **characterised in that** the mixer comprises two similar inlets (32, 33) and the double cartridge or the dispensing appliance comprises outlets (37, 38) having different diameters, one inlet (32) of the mixer fitting over the smaller outlet (37) of the cartridge or of the dispensing appliance while the other inlet (33) fits into the larger outlet (38) without previous alignment.

2. Dispensing assembly according to claim 1, **characterised in that** it is attachable to the outlet end of a double cartridge or of a dispensing appliance by means of a bayonet ring (35).

## Revendications

1. Agencement de distribution comprenant une cartouche double ou un applicateur et un mélangeur dynamique, **caractérisé en ce que** le mélangeur comporte deux orifices d'entrée (32, 33) identiques et la cartouche double ou l'applicateur comporte des raccords de sortie (37, 38) de différents diamètres, l'un des orifices d'entrée (32) du mélangeur étant, sans orientation préalable, enfichable sur le plus petit raccord de sortie (37) de la cartouche ou de l'applicateur et l'autre orifice d'entrée (33) dans le plus grand raccord de sortie (38).

2. Agencement de distribution selon la revendication 1, **caractérisé en ce qu'**il est attachable à l'extrémité de sortie d'une cartouche double ou d'un applicateur à l'aide d'une bague à baïonnette (35).
